# EUROPÄISCHE PATENTSCHRIFT

(11) **EP 4 573 884 B1**
(45) Veröffentlichungstag und Bekanntmachung des Hinweises auf die Patenterteilung: **18.02.2026**
(21) Anmeldenummer: 24208903.5
(22) Anmeldetag: 25.10.2024
(51) Int. Cl.: A01F 29/06, A01F 29/09, A01F 29/22

(54) **VERFAHREN ZUR INSTANDHALTUNG EINER HÄCKSELVORRICHTUNG EINER LANDMASCHINE**
METHOD FOR MAINTAINING A CHOPPING DEVICE OF AN AGRICULTURAL MACHINE
PROCÉDÉ DE MAINTENANCE D'UN DISPOSITIF HACHEUR D'UNE MACHINE AGRICOLE

(30) Priorität: 18.12.2023 DE 102023135637
(43) Veröffentlichungstag der Anmeldung: 25.06.2025
(73) Patentinhaber: Maschinenfabrik Bernard Krone GmbH & Co. KG, 48480 Spelle (DE)
(72) Erfinder: Böyer, Guido, 48683 Ahaus (DE)

(56) Entgegenhaltungen:
- DE-A1- 102020 128 518
- DE-B4- 19 652 656
- DE-T2- 68 902 669

## Beschreibung

Die vorliegende Erfindung betrifft ein Verfahren zur Instandhaltung einer Häckselvorrichtung einer Landmaschine, nach Anspruch 1.

Bei landwirtschaftlichen Erntemaschinen wie zum Beispiel Feldhäckslern ist es bekannt, Erntegut aufzunehmen und durch Häckseln weiterzuverarbeiten, bevor es zum Beispiel an ein Begleitfahrzeug wie einen Ladewagen übergeben wird. Ein bekannter Typ von Häckselvorrichtung weist eine drehbare Häckseltrommel auf, mit einer Mehrzahl von Messern, die an einer stationären Gegenschneide vorbeigeführt werden. Das Erntegut wird jeweils zwischen Messer und Gegenschneide zertrennt. Für ein optimales Ergebnis ist eine scharfe Schneidkante auf Seiten des Messers wünschenswert, sowie ein möglichst geringer Abstand zur Gegenschneide. Ein zunehmender Abnutzungsgrad des Messers kann dadurch kompensiert werden, dass die Gegenschneide zur Häckseltrommel hin verstellt wird, um einen geeigneten Abstand zum Messer herzustellen. Allerdings ist der Stellbereich der Gegenschneide begrenzt. Es ist auch bekannt, das Messer gegenüber einem Trommelkörper der Häckseltrommel unterschiedlich zu positionieren. Es kann zum Beispiel bei stärkerer Abnutzung weiter herausgezogen werden, falls sich diese Abnutzung nicht mehr allein durch Verstellen der Gegenschneide kompensieren lässt. Allerdings ist auch ein solches Herausziehen nur bis zu einem gewissen Grad möglich. Falls das Messer bereits zu stark abgenutzt ist, muss es ersetzt werden. Es ist nicht nur bekannt, den Abstand der Gegenschneide von der Häckseltrommel einzustellen, sondern auch die Neigung gegenüber der Häckseltrommel, zum Beispiel um eine Anpassung an eine möglicherweise vorhandene Neigung der Messer zu erreichen. Hierzu können beispielsweise die gegenüberliegenden Enden der Gegenschneide durch einzeln steuerbare Stellmechanismen verstellt werden. Zum Schärfen der Messer kann eine Schleifvorrichtung eingesetzt werden, bei welcher ein Schleifkopf entlang einer Schleifachse verstellbar ist und so positionierbar ist, dass die Messer bei rotierender Häckseltrommel an ihm vorbeigeführt werden.

Sofern ein Messer gezogen oder sogar ersetzt werden muss, ist nachfolgend ein Schleifvorgang nötig, um das Messer zu schärfen und um für eine korrekte Ausrichtung der Schneidkante zu sorgen. Hierzu ist es im Stand der Technik bekannt, zunächst die Gegenschneide von der Häckseltrommel abzufahren, also den Abstand zur Häckseltrommel zu vergrößern, und anschließend das (gezogene oder neu eingesetzte) Messer vor dem Schleifen an der Gegenschneide auszurichten. Um beim Abfahren der Gegenschneide deren Neigung wenigstens annähernd zu erhalten, werden vor dem Abfahren die Abstände der Enden zum Trommelkörper gemessen, wobei eine normalerweise vorhandene Differenz ermittelt wird. Beim Abfahren werden dann für beide Enden einzeln Abstände eingestellt, die sich wiederum um die zuvor ermittelte Differenz unterscheiden. Dieser Prozess ist insgesamt fehlerbehaftet, vor allem aufgrund des manuell durchgeführten Messens der Abstände zum Trommelkörper. Daher kann die Neigung der Gegenschneide nur ungenau reproduziert werden. Nachdem alle vorgesehenen Messer ausgezogen oder ersetzt wurden, erfolgt das Schleifen. Da die Messer an der zuvor abgefahrenen Gegenschneide ausgerichtet wurden, ist ihre Ausrichtung vor dem Schleifen ebenfalls ungenau, was zu hohen Verlusten beim Schleifen führt. Außerdem ist das manuelle Messen aufwändig. Nach dem Schleifen muss die Gegenschneide wieder an den geschliffenen Messern ausgerichtet werden, da ihre Ausrichtung im Allgemeinen nicht zur neu geschliffenen Schneidkante passt.

Die DE 10 2020 128518 A1 offenbart ein Verfahren zum Schleifen der Häckselmesser eines Feldhäckslers. Dabei erfolgt in einem ersten Schritt das Schleifen. Anschließend erfolgt eine Einstellung der Position der Gegenschneide.

Weitere Verfahren zum Schleifen von Häckselmessern sind auch aus DE 196 52 656 B4 und DE 689 02 669 T2 bekannt.

Aufgabe der Erfindung ist es, die Instandhaltung einer Häckselvorrichtung zu optimieren.

Die Aufgabe wird gelöst mit einem Verfahren mit den Merkmalen des unabhängigen Patentanspruchs 1. Vorteilhafte Ausführungsformen sind den abhängigen Ansprüchen entnehmbar.

Dafür wird ein Verfahren zur Instandhaltung einer Häckselvorrichtung einer Landmaschine geschaffen, welche Häckselvorrichtung eine gegenüber einem Rahmen um eine axiale Drehachse drehbare Häckseltrommel aufweist, mit einem Trommelkörper und einer Mehrzahl daran arretierbarer Messer, eine im Betriebszustand mit den Messern zusammenwirkende, gegenüber dem Rahmen arretierbare Gegenschneide mit zwei axial beabstandeten Endbereichen, wobei radiale Endbereich-Abstände von der Drehachse wenigstens teilweise unabhängig voneinander einstellbar sind, sowie eine Schleifvorrichtung, die dazu eingerichtet ist, die Messer entlang einer sich wenigstens anteilig axial erstreckenden Schleifachse zu schleifen, wobei das Verfahren wenigstens die folgenden Schritte aufweist:
- Schleifen wenigstens eines Messers mittels der Schleifvorrichtung;
- Ausrichten der Gegenschneide an wenigstens einem geschliffenen Messer durch Einstellen der Endbereich-Abstände;
- Fortbewegen der Gegenschneide von der Häckseltrommel in einer Parallelverstellung, wobei beide Endbereich-Abstände um einen gleichen Betrag vergrößert werden, welcher vorab festgelegt wurde;
- Neuanordnung wenigstens eines Messers am Trommelkörper, wobei das neu angeordnete Messer an der Gegenschneide ausgerichtet und am Trommelkörper arretiert wird; und
- Schleifen des wenigstens einen neu angeordneten Messers mittels der Schleifvorrichtung.

Bei der Landmaschine kann es sich insbesondere um einen selbstfahrenden Feldhäcksler handeln, allerdings wäre das Verfahren auch auf andere, zum Beispiel gezogene oder auch stationäre Maschinen anwendbar. Die Häckselvorrichtung dient zum Häckseln von landwirtschaftlichem Erntegut, zum Beispiel Mais oder Halmgut wie Gras oder Stroh. Der Rahmen kann als Teil der Häckselvorrichtung angesehen werden. Er kann allerdings auch ganz oder teilweise als ein Teil der Landmaschine angesehen werden, der nicht zur Häckselvorrichtung gehört. Er bildet ein stabiles, insbesondere in sich starres Gerüst, an dem verschiedene bewegliche Teile gelagert sein können. Hierzu zählt die Häckseltrommel der Häckselvorrichtung, die um die Drehachse drehbar ist. Durch die Drehachse, die als stationär bezüglich des Rahmens angesehen wird, sind eine axiale Richtung, eine radiale Richtung und eine tangentiale Richtung definiert. Die Häckseltrommel ist drehbar am Rahmen gelagert. Sie ist wenigstens zeitweise an einen Antrieb koppelbar, so dass sie um die Drehachse antreibbar ist. Der Antrieb selbst kann außerhalb der eigentlichen Häckselvorrichtung angeordnet sein, wobei eine Kraftübertragung auf die Häckseltrommel über ein Getriebe erfolgt.

Die Häckseltrommel weist einen Trommelkörper auf. Dieser kann rotationssymmetrisch zur Drehachse ausgebildet sein, beispielsweise zylinderartig. Er kann aus einer Mehrzahl von Einzelteilen bestehen, die im Betriebszustand starr miteinander verbunden sind. Am Trommelkörper sind eine Mehrzahl von Messern arretierbar. Genauer gesagt, sind die Messer im Betriebszustand am Trommelkörper arretiert. Sie können beispielsweise angeschraubt oder mittels Feststellschrauben festgeklemmt sein. Um Unwuchten zu vermeiden, sind die Messer vorteilhaft symmetrisch bezüglich der Drehachse angeordnet, zum Beispiel indem sie paarweise einander gegenüberliegend angeordnet sind. Aus Stabilitätsgründen sind sowohl der Trommelkörper als auch die Messer bevorzugt aus Stahl gefertigt.

Die Gegenschneide wirkt im Betriebszustand mit den Messern zusammen. Im Betriebszustand ist die Gegenschneide gegenüber dem Rahmen arretiert, wobei die Messer entsprechend der Rotation der Häckseltrommel an der Gegenschneide vorbeigeführt werden. Typischerweise erstreckt sich die Gegenschneide in axialer Richtung über wenigstens 60% der axialen Ausdehnung der Häckseltrommel. Insbesondere sollte sie in axialer Richtung den gesamten von den Messern eingenommenen Bereich einnehmen. Auch die Gegenschneide kann aus Stahl bestehen. Erntegut, welches zwischen Gegenschneide und Messer gelangt, wird zertrennt. Im Zusammenhang mit dem erfindungsgemäßen Verfahren bezieht sich die "Instandhaltung" der Häckselvorrichtung insbesondere auf eine Wiederherstellung einer optimalen Messerschärfe und eines optimalen Abstands zwischen Messer und Gegenschneide, welche wesentliche Voraussetzungen für ein optimales Häckselergebnis sind.

Die Gegenschneide weist zwei axial beabstandete Endbereiche auf. Die Endbereiche können auch als "Enden" bezeichnet werden. Sie liegen einander in axialer Richtung gegenüber. Somit erstreckt sich die Gegenschneide in axialer Richtung, wobei sie im Allgemeinen allerdings nicht exakt parallel zur Drehachse verläuft. Jedem Endbereich kann ein radialer Endbereich-Abstand von der Drehachse zugeordnet werden. Die Endbereich-Abstände können gleich sein, sie können aber auch unterschiedlich sein, so dass die Gegenschneide gegenüber der axialen Richtung zur radialen Richtung hin geneigt ist, wenn auch nur geringfügig. Die Endbereich-Abstände sind wenigstens teilweise unabhängig voneinander einstellbar. Dies bezieht sich bevorzugt auf eine aktorische Einstellbarkeit. "Unabhängig voneinander einstellbar" bedeutet insbesondere, dass eine Differenz zwischen den beiden Endbereich-Abständen veränderbar ist und somit die Neigung gegenüber der axialen Richtung. Die Einstellbarkeit ist unter Umständen nicht vollständig unabhängig. Zum Beispiel kann die oben genannte Differenz und somit die Neigung betragsmäßig aus konstruktiven Gründen beschränkt sein. Auch wäre es denkbar, dass zwei unabhängige Verstellmechanismen vorgesehen sind, von denen einer beide Endbereich-Abstände beeinflusst und der andere nur einen Endbereich-Abstand. Der Einstellung eines Endbereich-Abstands muss nicht zwangsläufig eine Bewegung parallel zur radialen Richtung zugrunde liegen. Die Bewegung muss nur anteilig radial erfolgen und kann zum Beispiel auch eine tangentiale Komponente aufweisen.

Außerdem weist die Häckselvorrichtung die Schleifvorrichtung auf. Diese dient zum Schleifen der Messer, was die Möglichkeit einschließt, dass jeweils ein Messer geschliffen werden kann oder eine Mehrzahl von Messern gleichzeitig. Genauer ist die Schleifvorrichtung dazu eingerichtet, die Messer entlang einer sich wenigstens anteilig axial erstreckenden Schleifachse zu schleifen. Das heißt durch das Schleifen wird eine Schneidkante am jeweiligen Messer erzeugt, deren Verlauf durch die Schleifachse bestimmt ist. Sie kann zum Beispiel zur Schleifachse parallel sein. Dies gilt allerdings zum Beispiel nicht, wenn der Verlauf der Schneidkante von der axial-radialen Ebene abweicht. Betrachtet man allerdings nur die Neigung innerhalb der axial-radialen Ebene, so stimmen die Neigung der Schleifachse und die der Schneidkante nach dem Schleifen überein. Vorteilhaft ist die Schleifvorrichtung tangential gegenüber der Gegenschneide versetzt angeordnet, so dass der Schneidvorgang und das Schleifen eines Messers in unterschiedlichen Positionen erfolgen.

Das Verfahren weist wenigstens die nachfolgend genannten Schritte auf. Diese werden bevorzugt in der genannten Reihenfolge ausgeführt. Es kann aber zwischen jeweils zwei genannte Verfahrensschritten wenigstens ein weiterer Verfahrensschritt ausgeführt werden.

In einem Schritt erfolgt ein Schleifen wenigstens eines Messers mittels der Schleifvorrichtung. Durch das Schleifen wird, wie erläutert eine Schneidkante erzeugt, die an der Schleifvorrichtung ausgerichtet ist und beispielsweise parallel zur Schleifachse verlaufen kann. Aufgrund der Rotation der Häckseltrommel ist die Schneidkante im Allgemeinen höchstens dann parallel zur Schleifachse, wenn sich das Messer nahe der Schleifvorrichtung befindet. Dies ist nur dann der Fall, wenn die Schleifachse exakt parallel zur Drehachse verläuft. Andernfalls ändert sich die Neigung der Schneidkante gegenüber der Schleifachse, wobei die Schneidkante im Zuge der Rotation entlang einer gedachten Kegelmantelfläche läuft. Betrachtet man lediglich die axial-radiale Ebene, so ändert sich die Neigung der Schneidkante gegenüber der Drehachse während der Rotation nicht und entspricht wenigstens näherungsweise der Neigung der Schleifachse gegenüber der Drehachse. Sofern nicht ausdrücklich anders festgelegt, bezieht sich der Begriff "Neigung" im Folgenden stets auf die Neigung innerhalb der axial-radialen Ebene, das heißt eine mögliche Neigung gegenüber der axialen Richtung in tangentialer Richtung wird außer Acht gelassen.

In einem weiteren Schritt erfolgt ein Ausrichten der Gegenschneide an wenigstens einem geschliffenen Messer durch Einstellen der Endbereich-Abstände. Das "geschliffene Messer" ist ein Messer, welches im vorangehenden Schritt geschliffen wurde. Es wird hierdurch bevorzugt erreicht, dass beide Endbereiche gleich weit vom geschliffenen Messer entfernt sind. Man kann in diesem Fall sagen, dass die Neigung der Gegenschneide an die Neigung des Messers angepasst wird. Vorteilhaft wird die Gegenschneide durch das Ausrichten radial benachbart zu dem Messer angeordnet, wobei der radiale Abstand zwischen Gegenschneide und Schneidkante zum Beispiel weniger als 0,5 mm, weniger als 0,2 mm oder weniger als 0,1 mm betragen kann.

Des Weiteren erfolgt ein Fortbewegen der Gegenschneide von der Häckseltrommel in einer Parallelverstellung, wobei beide Endbereich-Abstände um einen gleichen Betrag vergrößert werden. Statt einem Fortbewegen kann man auch von einem Abfahren sprechen. Die Gegenschneide wird von der Häckseltrommel und somit von der Drehachse fortbewegt. Dies erfolgt in einer Parallelverstellung. Das heißt die Gegenschneide ist nach der Parallelverstellung parallel zu ihrer Position vor der Parallelverstellung ausgerichtet. Somit hat sich auch weiterhin die gleiche Neigung gegenüber der Drehachse wie die Schleifachse. Es ist dabei möglich, dass sich während der Parallelverstellung zwischenzeitlich eine Änderung der Neigung ergibt, dadurch dass die beiden Endbereich-Abstände nicht gleichzeitig und/oder nicht mit gleicher Geschwindigkeit vergrößert werden. Die Differenz der beiden Endbereich-Abstände ist allerdings vor und nach der Parallelverstellung gleich. Der Betrag, um den die Endbereich-Abstände vergrößert werden, wurde vorab festgelegt, also vor der Parallelverstellung. Somit ist sichergestellt, dass beide Endbereich-Abstände in gleichem Maße verändert werden. Dies steht im Gegensatz zum Stand der Technik, wo eine Veränderung um den gleichen Betrag im Einzelfall vorkommen konnte, aber lediglich zufällig aufgetreten wäre.

In einem weiteren Schritt erfolgt eine Neuanordnung wenigstens eines Messers am Trommelkörper, wobei das neu angeordnete Messer an der Gegenschneide ausgerichtet und am Trommelkörper arretiert wird. Der Begriff "Neuanordnung" bedeutet allgemein, dass das Messer in einer Position angeordnet wird, in der es bislang nicht angeordnet war. Dabei wird es an der Gegenschneide ausgerichtet, während die Gegenschneide stationär gehalten wird. Das heißt die Endbereich-Abstände werden konstant gehalten. Die Schneidkante des Messers wird hierbei bevorzugt so ausgerichtet, dass ihre Neigung mit derjenigen der Gegenschneide übereinstimmt. Je nach Ausführungsform der Erfindung kann allerdings auch eine gewisse Abweichung in Kauf genommen werden. Vorteilhaft wird das Messer benachbart zur Gegenschneide angeordnet, wobei der Abstand zwischen Gegenschneide und Schneidkante zum Beispiel weniger als 0,5 mm, weniger als 0,2 mm oder weniger als 01, mm betragen kann. Nach der Ausrichtung wird das Messer am Trommelkörper arretiert. Da es an der Gegenschneide ausgerichtet wurde, hat es nun eine Neigung gegenüber der Drehachse, die zumindest näherungsweise derjenigen der Schleifachse entspricht.

Des Weiteren erfolgt ein Schleifen des wenigstens einen neu angeordneten Messers mittels der Schleifvorrichtung. Auch hierbei wird eine an der Schleifachse ausgerichtete Schneidkante erzeugt. Da das Messer an der Gegenschneide ausgerichtet wurde, weist es wie bereits erläutert, eine Neigung auf, die bereits annähernd, eventuell auch exakt, der Neigung der Schleifachse entspricht. Daher wird das Messer sehr gleichmäßig geschliffen. Es entstehen weniger unnötige Schleifverluste.

Ein wesentlicher Vorteil des erfindungsgemäßen Verfahrens ist die Vermeidung von Schleifverlusten und somit eine Materialersparnis. Jedes Messer kann bei gleicher Beanspruchung, also zum Beispiel bei einer gleichen Anzahl von Einsatzstunden unter vergleichbaren Bedingungen, länger verwendet werden. Ein Austausch eines Messers ist seltener notwendig. Abgesehen hiervon wird der Benutzer von der mühsamen, zeitraubenden und fehleranfälligen Aufgabe entbunden, die Abstände der Endbereiche vom Trommelkörper manuell zu messen. Der Verstellung der Gegenschneide liegt ein vorher festgelegter Betrag zugrunde, um den beide Endbereiche abgefahren werden.

Die Einstellung der Endbereich-Abstände kann in unterschiedlicher Weise erfolgen. Allgemein sind wenigstens zwei unabhängige Antriebe notwendig. Gemäß einer Ausgestaltung werden die Endbereich-Abstände mittels zweier aktorischer Stelleinrichtungen eingestellt, von denen jede auf einen der Endbereiche einwirkt. Jede Stelleinrichtung weist bevorzugt einen Motor auf, der über Mittel zur Kraftübertragung auf den Endbereich wirken kann. Zum Beispiel kann jeder Endbereich mit einem Stellhebel verbunden sein, der um eine am Rahmen stationäre Hebelachse schwenkbar ist. Der Stellhebel kann an eine Koppelstange gekoppelt sein, die durch den Motor angetrieben wird. Zum Beispiel kann ein Rotationsmotor über einen Spindeltrieb auf die Koppelstange wirken. Selbstverständlich sind auch andere Ausgestaltungen der Stelleinrichtungen denkbar.

Die Schleifvorrichtung kann unterschiedliche Funktionsprinzipien nutzen. Gemäß einer vorteilhaften Ausgestaltung wird das wenigstens eine Messer geschliffen, indem dieses bei rotierender Häckseltrommel an einem Schleifkopf der Schleifvorrichtung vorbeigeführt wird, welcher während des Schleifens entlang einer bezüglich des Rahmens stationären Schleifführung parallel zur Schleifachse verstellt wird. Die Schleifführung kann durch eine Führungsschiene oder dergleichen realisiert sein, an welcher der Schleifkopf verschieblich gelagert ist. Der Schleifkopf wirkt jeweils nur auf einen Teilbereich des jeweiligen Messers, wobei der Teilbereich durch die Verstellung des Schleifkopfs verlagert wird. Die Verstellgeschwindigkeit des Schleifkopfs entlang der Schleifführung kann dabei kleiner sein als die Bahngeschwindigkeit des Messers während der Rotation der Häckseltrommel. Wenn die Verstellgeschwindigkeit wesentlich kleiner ist, kann der Schleifkopf als bezüglich des Rahmens quasistationäres Objekt angesehen werden, an dem das sich bewegende Messer vorbeigeführt wird.

Hinsichtlich der Neuanordnung eines Messers sind grundsätzlich zwei Möglichkeiten gegeben. Zum einen kann bei der Neuanordnung die Position wenigstens eines Messers am Trommelkörper verändert werden. Das heißt das Messer war bereits am Trommelkörper montiert und wird nur verschoben, man kann auch sagen, gezogen oder ausgezogen. Die Arretierung des Messers wird gelöst, wobei es verschiebbar mit dem Trommelkörper verbunden bleiben kann, und nach der Neuanordnung wird das Messer wieder arretiert. Diese Variante kann bei einem eher geringen Abnutzungsgrad des Messers eingesetzt werden. Zum anderen kann wenigstens ein Messer vom Trommelkörper demontiert werden und durch ein anderes Messer ersetzt werden. Das entsprechende Messer wird also vollständig vom Trommelkörper gelöst. Anschließend wird ein anderes, bevorzugt neues, Messer am Trommelkörper angeordnet und arretiert. Diese Variante kann insbesondere bei einem Messer angewendet werden, welches bereits so stark abgenutzt ist, dass es nicht weiter ausgezogen werden kann.

Es sind Ausgestaltungen des Verfahrens denkbar, bei denen nur ein einziges Messer geschliffen und neu angeordnet wird. Dies ist allerdings in der Regel zumindest ineffizient. Vorteilhaft erfolgen ein Schleifen und/oder eine Neuanordnung einer Mehrzahl von Messern, insbesondere aller Messer. Insbesondere bei einer Schleifvorrichtung, die bei laufender Häckseltrommel arbeitet, ist ein Schleifen einzelner Messer nicht möglich. Beispielsweise können zunächst alle Messer geschliffen werden. Anschließend können eine Mehrzahl von Messern, insbesondere alle Messer, neu angeordnet werden. Schließlich kann ein erneutes Schleifen aller Messer erfolgen.

Bevorzugt wird nach dem Schleifen des wenigstens einen neu angeordneten Messers, durch Einstellen der Endbereich-Abstände ein erneutes Ausrichten der Gegenschneide an wenigstens einem neu angeordneten und geschliffenen Messer durchgeführt. Dies trägt der Möglichkeit Rechnung, dass die Gegenschneide nach dem Schleifen des oder der Messer nicht optimal ausgerichtet ist. Insbesondere kann einer oder beide Endbereich-Abstände für ein optimales Häckselergebnis zu groß sein. Da die Schneidkanten aller zuvor geschliffenen Messer eine identische Ausrichtung gegenüber der Drehachse aufweisen, ist es grundsätzlich möglich, nur ein Messer oder eine Mehrzahl von Messern zur Ausrichtung der Gegenschneide zu nutzen.

Gemäß einer Ausgestaltung des Verfahrens werden beim erneuten Ausrichten der Gegenschneide die Endbereich-Abstände in einer Parallelverstellung um einen gleichen Betrag verringert, welcher vorab festgelegt wurde. Der Betrag kann sich allgemein von demjenigen unterscheiden, um den die beiden Endbereich-Abstände zuvor vergrößert wurden. Allerdings wird auch hier durch die Parallelverstellung die Neigung der Gegenschneide gegenüber der axialen Richtung nicht verändert. Diese Ausgestaltung geht davon aus, dass die Neigung der Gegenschneide nach wie vor derjenigen der Schleifachse entspricht und dass die Neigung der Schleifachse gleich geblieben ist. Eine optimale Ausrichtung lässt sich unter Umständen nicht durch eine einzige Parallelverstellung erreichen. Es können auch eine Mehrzahl von Parallelverstellungen durchgeführt werden, wobei die Endbereich-Abstände auch vergrößert werden können, zum Beispiel wenn ein Kontakt zwischen Gegenschneide und Messer festgestellt wurde.

Die oben genannten Annahmen hinsichtlich der Neigung der Gegenschneide sind zumindest näherungsweise richtig. Allerdings können sich aufgrund von evtl. vorhandenem Spiel oder andere Faktoren sowohl die Neigung der Gegenschneide also auch diejenige der Schleifachse ändern, wenn auch nur geringfügig. Um dieser Möglichkeit Rechnung zu tragen, ist es in einer anderen Ausgestaltung möglich, dass beim erneuten Ausrichten der Gegenschneide die Endbereich-Abstände einzeln eingestellt werden. Es erfolgt also im Allgemeinen keine Parallelverstellung, sondern die Neigung der Gegenschneide kann geändert werden, um sich an diejenige der Schneidkante des Messers anzupassen.

Während bei erneutem Ausrichten der Gegenschneide zwischen einer Parallelverstellung und einer einzelnen Einstellung der Endbereich-Abstände gewählt werden kann, werden bei der ersten Ausrichtung der Gegenschneide vorteilhaft die Endbereich-Abstände einzeln eingestellt.

Bevorzugt wird wenigstens eine Parallelverstellung automatisch durchgeführt. Dies kann sich auf die Vergrößerung der Endbereich-Abstände und oder auf die Verringerung der Endbereich-Abstände beziehen. Dabei werden die Endbereich-Abstände um den jeweiligen Betrag verändert, ohne dass ein Benutzer die Veränderung manuell steuern oder kontrollieren muss. Evtl. kann auch der Betrag der Veränderung automatisch festgelegt werden.

Wie bereits erläutert, können bei einer Parallelverstellung die beiden Endbereich-Abstände nacheinander verändert werden, also vergrößert oder verkleinert werden. Um die Neigung der Gegenschneide möglichst exakt zu erhalten, kann es allerdings vorteilhaft sein, dass bei einer Parallelverstellung die Endbereich-Abstände gleichzeitig verändert werden. Das heißt bei der oben genannte Ausführungsform, bei welcher jedem Endbereich aktorische Stelleinrichtung zugeordnet ist, werden die Aktoren beider Stelleinrichtungen gleichzeitig aktiviert.

Eine Ausführungsform sieht vor, dass bei wenigstens einem Ausrichten der Gegenschneide wenigstens ein Endbereich-Abstand verringert wird, ein Kontakt zwischen der Gegenschneide und wenigstens einem Messer geprüft wird und der wenigstens eine Endbereich-Abstand bei Vorliegen eines Kontakts vergrößert wird. Es können beide Endbereich-Abstände gleichzeitig verringert werden, insbesondere wenn eine Parallelverstellung der Gegenschneide durchgeführt wird. Alternativ kann auch jeweils nur ein Endbereich-Abstand verringert werden. Wird ein Kontakt zwischen Gegenschneide und Messer festgestellt, bedeutet dies, dass der Endbereich-Abstand bereits zu gering ist. Derartige Kontakte würden beim Betrieb das Messer und gegebenenfalls die Gegenschneide beschädigen. Dementsprechend wird der wenigstens eine Endbereich-Abstand wieder vergrößert. Auch dies kann sich auf einen oder beide Endbereich-Abstände beziehen. Sofern beide Endbereich-Abstände zuvor verringert wurden, kann es sinnvoll sein, bei einem Kontakt auch beide Endbereich-Abstände zu vergrößern.

Bevorzugt wird wenigstens ein Ausrichten der Gegenschneide bei rotierender Häckseltrommel durchgeführt, wobei das Vorliegen eines Kontakts zwischen der Gegenschneide und wenigstens einem Messer mittels eines Schwingungssensors geprüft wird. Wenn es bei rotierender Häckseltrommel zu einem Kontakt zwischen Gegenschneide und Messer kommt, resultiert hieraus Auslenkung beider Teile, die als Vibration oder Schwingung feststellbar ist. Sie kann durch einen Schwingungssensor gemessen werden. Der Schwingungssensor kann wenigstens indirekt mit der Gegenschneide oder dem Messer in Kontakt stehen. Da der Betrieb der Häckseltrommel auch ohne derartige Kontakte zu Schwingungen führt, ist es normalerweise nötig, den Schwingungssensor zu kalibrieren. Im Rahmen der Kalibrierung wird eine gewisse Intensität und/oder ein gewisses Frequenzspektrum an Schwingungen als normal erkannt, so dass eine erhebliche Abweichung hiervon als Anzeichen für einen Kontakt interpretiert werden kann. Die Kalibrierung kann vor jedem Ausrichten der Gegenschneide durchgeführt werden.

Es kann vorgesehen sein, dass bei einer Parallelverstellung die Endbereich-Abstände in einer Mehrzahl von Schritten verringert werden, wobei nach jedem Schritt ein Kontakt geprüft wird. Es kann vorab ein Betrag bestimmt werden, um den die Endbereich-Abstände verringert werden sollen, allerdings erfolgt die Verringerung nicht in einem Schritt, sondern einer Mehrzahl von Schritten. Ist beispielsweise eine Verringerung um 0,8 mm vorgesehen, kann in jedem Schritt einer Verringerung um 0,02 mm oder 0,01 mm erfolgen. Die Verringerung kann beendet oder abgebrochen werden, falls nach einem Schritt ein Kontakt festgestellt wird. Somit kann vermieden werden, dass es zu einem intensiveren Kontakt zwischen Gegenschneide und Messer kommt, weshalb auch eine mögliche Beschädigung auf ein Minimum begrenzt wird. Das hier beschriebene Vorgehen kann insbesondere beim Ausrichten der Gegenschneide angewendet werden.

Um Beschädigungen zu vermeiden, ist es vorteilhaft, dass bei Vorliegen eines Kontakts der wenigstens eine Endbereich-Abstand so lange vergrößert wird, bis kein Kontakt mehr festgestellt wird. Dies könnte prinzipiell ausreichend sein, um einen weiteren Kontakt beim Betrieb der Häckselvorrichtung zu vermeiden. In der Praxis hat sich allerdings gezeigt, dass es aufgrund unterschiedlicher Einflüsse, zum Beispiel thermischer Verformung, Spiel zwischen Bauteilen etc., mitunter doch zu Kontakten kommen kann. Daher ist es bevorzugt, dass nach der Feststellung, dass kein Kontakt mehr vorliegt, beide Endbereich-Abstände in einer Parallelverstellung um einen gleichen Sicherheitsbetrag vergrößert werden, welcher vorab festgelegt wurde. Der Sicherheitsbetrag kann wesentlich kleiner sein als der Betrag beim oben genannten Fortbewegen der Gegenschneide. Er könnte zum Beispiel höchstens 20% oder höchstens 10% betragen. Bei der Festlegung des Sicherheitsbetrags kann eine Abwägung getroffen werden zwischen der sicheren Vermeidung von Kontakten zwischen Gegenschneide und Messer einerseits und einer möglichst effektiven Durchtrennung von Erntegut andererseits.

Im Folgenden wird die Erfindung anhand von Figuren beschrieben. Die Figuren sind lediglich beispielhaft und schränken den allgemeinen Erfindungsgedanken nicht ein. Es zeigen
- Fig. 1: eine perspektivische Darstellung einer ersten Häckselvorrichtung zur Verwendung bei einem erfindungsgemäßen Verfahren;
- Fig. 2: eine perspektivische Darstellung einer Häckseltrommel der Häckselvorrichtung aus Fig. 1;
- Fig. 3A-3F: schematische Darstellungen der Häckselvorrichtung aus Fig.1 während verschiedener Schritte eines erfindungsgemäßen Verfahrens; und
- Fig. 4: ein Flussdiagramm eines erfindungsgemäßen Verfahrens.

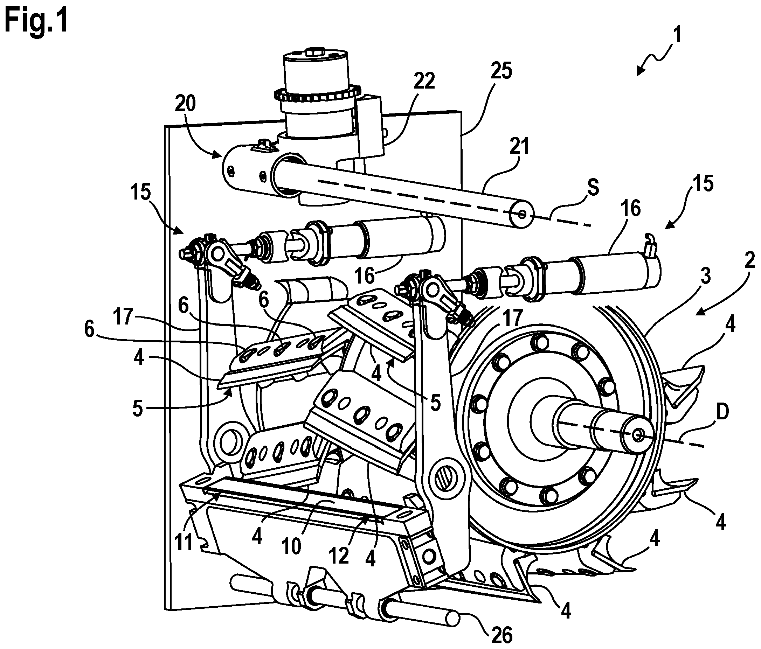

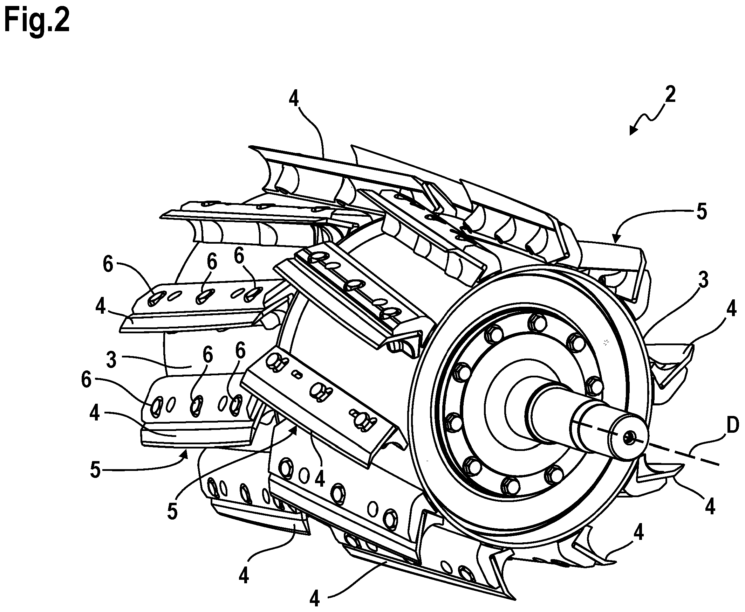

Fig. 1 zeigt eine Häckselvorrichtung 1, die zum Beispiel Teil eines selbstfahrenden Feldhäckslers sein kann. Sie kann dazu dienen, Erntegut, das durch einen Einzug des Feldhäckslers aufgenommen wurde, zu zerkleinern, bevor es an nachgeordnete Komponenten weitergegeben wird. Die meisten Teile des Feldhäckslers sowie eine Verkleidung der Häckselvorrichtung 1 wurden aus Gründen der Übersichtlichkeit weggelassen. Ein wesentliches Element der Häckselvorrichtung 1 ist eine Häckseltrommel 2, die in Fig. 2 einzeln dargestellt ist. Sie weist einen Trommelkörper 3 auf, der um eine Drehachse D an einem Rahmen 25 drehbar gelagert ist. Der Rahmen 25 ist in Fig. 1 nur teilweise und vereinfacht dargestellt. Er bildet ein in sich starres Gerüst, an welchem verschiedene Teile der Häckselvorrichtung 1 angeordnet sind. Am Trommelkörper 3 sind eine Mehrzahl von Messern 4 angeordnet, wobei jedes Messer 4 auf einem Messerträger (ohne Bezugszeichen) sitzt und mittels einer Anschraubleiste 7 arretiert ist, die wiederum durch Sicherungsschrauben 6 gesichert ist. In Fig. 2 ist die Anschraubleiste 7 eines der Messer 4 entfernt. Durch die Drehachse D sind eine axiale Richtung, eine tangentiale Richtung und eine radiale Richtung definiert. Wenn die Häckseltrommel 2 durch einen nicht dargestellten Antrieb in Drehbewegung gesetzt wird, bewegen sich die Messer 4 in tangentialer Richtung.

Zum Zerkleinern des Ernteguts wirken die Messer 4 mit einer Gegenschneide 10 zusammen. Die Gegenschneide 10 kann bezüglich des Rahmens 25 arretiert werden, wobei im Betriebszustand Schneidkanten 5 der Messer 4 dicht an der Gegenschneide 10 vorbeigeführt werden, sodass Erntegut zwischen diesen zerteilt wird. Die Gegenschneide 10 ist über eine Hebelachse 26, die in diesem Beispiel parallel zur Drehachse D verläuft, schwenkbar mit dem Rahmen 25 verbunden. An zwei gegenüberliegenden Endbereichen 11, 12 der Gegenschneide 10 setzt jeweils ein Stellhebel 17 einer Stelleinrichtung 15 an. Jeder Stellhebel 17 kann mittels eines ihm zugeordneten Aktors 16 ausgelenkt werden. Somit können die beiden Endbereiche 11, 12 in begrenztem Maße unabhängig voneinander um die Hebelachse 26 geschwenkt werden. Außerdem ist ein Schwenken der Gegenschneide 10 insgesamt möglich, in dem beide Aktoren 16 gleichzeitig aktiviert werden. Durch die Stelleinrichtungen 15 können bezüglich der Drehachse D gegebene radiale Endbereich-Abstände A1, A2 der beiden Endbereiche 11, 12 verändert werden.

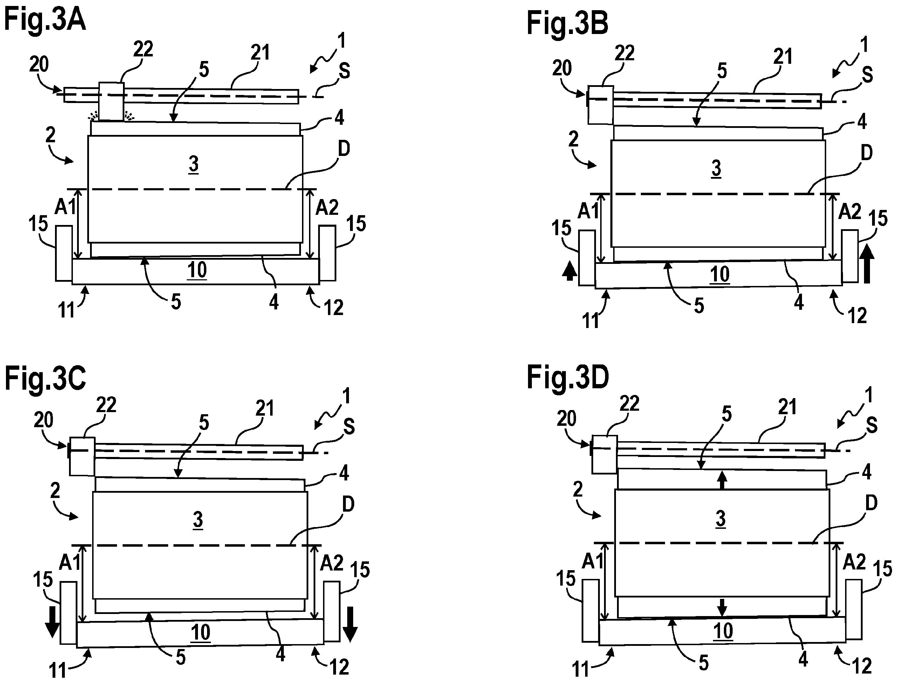

Des Weiteren ist in Fig. 1 eine Schleifvorrichtung 20 erkennbar, die eine stationär mit dem Rahmen 25 verbundene Schleifführung 21 aufweist, die parallel zu einer Schleifachse S verläuft. Ein Schleifkopf 22 ist entlang der Schleifführung 21 verstellbar. Er kann so positioniert werden, dass die Messer 4 bei rotierender Häckseltrommel 2 in schleifendem Kontakt an ihm vorbei geführt werden, wodurch die Schneidkante 5 entsprechen des Verlaufs der Schleifachse S geschliffen wird. Allerdings verläuft die Schneidkante 5 nicht parallel zur Schleifachse S. Vielmehr definiert der parallel zur Schleifachse S bewegliche Schleifkopf 21 durch seinen Kontakt mit den Messern eine Gerade. Durch Rotation dieser Gerade um die Drehachse D ergibt sich die Mantelfläche eines Kegels oder Zylinders. Die Schneidkante 5 verläuft ihrerseits entlang dieser Mantelfläche. In jedem Fall ergibt sich durch den Schleifvorgang eine Neigung der Schneidkante 5 gegenüber der Drehachse D, die mit einer Neigung der Schleifachse S übereinstimmt. Diese Aussage bezieht sich auf die Neigung innerhalb der axial-radialen Ebene, das heißt eine in diesem Beispiel ebenfalls gegebene Neigung in der tangentialen Richtung wird außer Acht gelassen. Wie in Fig.3A-3F übertrieben dargestellt ist, verlaufen die Schleifachse S und die Drehachse D im Allgemeinen nicht exakt parallel zueinander, das heißt es ist eine von Null verschiedene Neigung der Schleifachse S gegenüber der axialen Richtung gegeben.

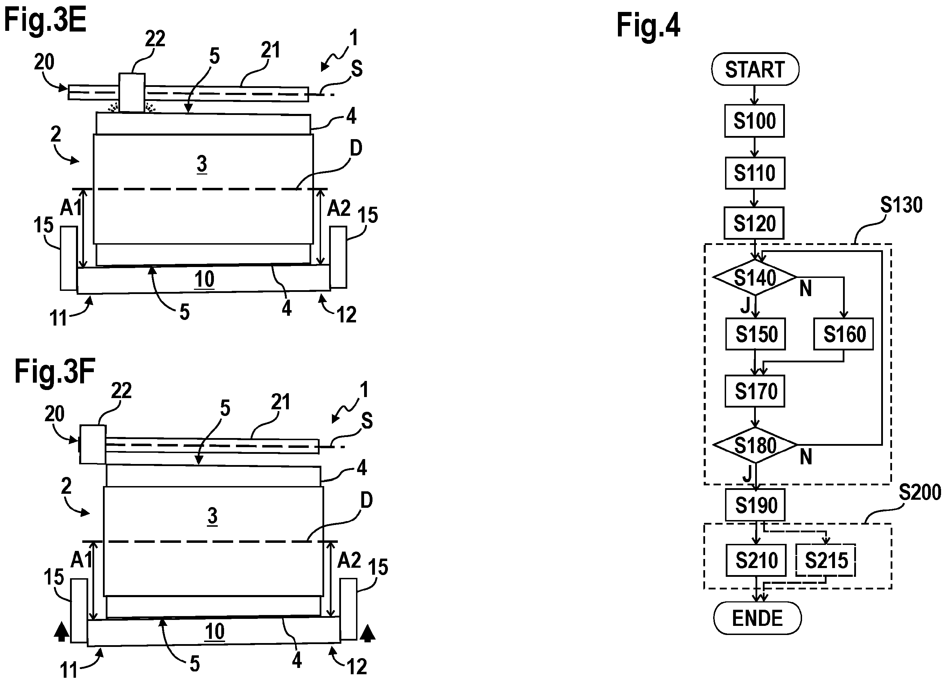

Für ein optimales Häckselergebnis müssen die Messer 4 scharf sein und auf ganzer Länge einen geringen Abstand zur Gegenschneide 10 aufweisen. Hierfür ist es auch notwendig, dass die Neigung der Gegenschneide 10 an die Neigung der Schneidkanten 5 angepasst ist. Um die Schärfe der Schneidkanten 5 aufrecht zu erhalten, müssen die Messer 4 bedarfsweise geschliffen werden. Durch den Schleifvorgang vergrößert sich der Abstand zu Gegenschneide, was in begrenztem Maße durch Verringern der radialen Endbereich-Abstände A1, A2 kompensiert werden kann. Bei einer gewissen Abnutzung der Messer 4 ist dies allerdings nicht mehr ausreichend. In diesem Fall muss ein erfindungsgemäßes Verfahren durchgeführt werden, welches nun mit Bezug auf das Flussdiagramm in Fig. 4 sowie die Figuren 3A - 3F erläutert wird.

In einem ersten Schritt S100 werden sämtliche Messer 4 mittels der Schleifvorrichtung 20 geschliffen, so das definierte Schneidkanten 5 erzeugt werden, deren Neigung mit derjenigen der Schleifachse S übereinstimmt. Dieser Vorgang ist schematisch in Fig.3A dargestellt. Danach wird im Schritt S110 die Gegenschneide 10 an den zuvor geschliffenen Messern 4 ausgerichtet, wie in Fig.3B angedeutet ist. Dabei werden die Endbereich-Abstände A1, A2 einzeln verringert, bis mittels eines hier nicht dargestellten Schwingungssensors ein Kontakt zwischen Messer 4 und Gegenschneide 10 festgestellt wird. Nach dem Feststellen des Kontakts kann der jeweilige Endbereich-Abstand A1, A2 wieder vergrößert werden, bis kein Kontakt mehr festgestellt wird. In diesem Zustand entspricht die Neigung der Gegenschneide 10 zumindest annähernd der Neigung der Schleifachse S. In einem weiteren Schritt S120 wird die Gegenschneide 10 von der Häckseltrommel 2 fortbewegt. Dies geschieht in einer in Fig.3C dargestellten Parallelverstellung, wobei beide Endbereich-Abstände A1, A2 um einen gleichen Betrag vergrößert werden, welcher vorab festgelegt wurde. Durch die Parallelverstellung bleibt die Neigung der Gegenschneide 10 erhalten.

In einem Block S130 erfolgt nun eine Neuanordnung der Klingen 4 in einem Schritt S 140 wird entschieden, ob die jeweilige Klinge 4 in Anbetracht ihres Abnutzungsgrades ausgezogen werden kann, also so verstellt werden kann, dass sie wieder weiter vom Trommelkörper 3 abragt. Wird dies bejaht, wird im Schritt S150 die Klinge 4 nach Lösen der Sicherungsschrauben 6 verstellt, wie in Fig.3D angedeutet ist. Im Schritt S170 wird sie an der Gegenschneide 10 ausgerichtet, so dass die Neigung ihrer Schneidkante 5 gegenüber der Drehachse D annähernd mit derjenigen der Gegenschneide 10 übereinstimmt. Wird in Schritt S140 entschieden, dass der Abnutzungsgrad zu groß ist, wird die Klinge 4 demontiert und durch eine neue Klinge 4 ersetzt, die ebenfalls bei Schritt S170 ausgerichtet wird. In Schritt S180 wird überprüft, ob dies bereits die letzte Klinge 4 war. Falls nein, kehrt das Verfahren zu Schritt S140 zurück, wo die nächste Klinge 4 überprüft wird. Falls ja, wird der Block S130 verlassen und in einem Schritt S190 werden die klingen 4 wiederum bei rotierender Häckseltrommel 2 mittels der Schleifvorrichtung 20 geschliffen, was in Fig.3E dargestellt ist. Hierdurch erfolgt eine exakte Anpassung der Neigung ihrer Schneidkanten 5.

In einem weiteren Block S200 wird die Gegenschneide 10 erneut an den Klingen 4 ausgerichtet, wie in Fig.3F angedeutet. Sofern man davon ausgeht, dass die Neigung der Gegenschneide 10 und die der Schneidkanten 5 mit ausreichender Genauigkeit übereinstimmen, kann in einem Schritt S210 eine Parallelverstellung durchgeführt werden, wobei die Endbereich-Abstände A1, A2 um einen gleichen Betrag verringert werden, welcher vorab festgelegt wurde. Die eigentliche Verringerung kann schrittweise erfolgen, wobei nach jedem Schritt ein Kontakt zwischen Gegenschneide 10 und Messer 4 überprüft wird. Dabei wird allerdings nicht zwischen einem Kontakt auf Seiten des ersten Endbereichs 11 und einem Kontakt auf Seiten des zweiten Endbereichs 12 unterschieden. Sofern die Übereinstimmung der Neigungen fraglich ist, können alternativ in einem Schritt S215 die Endbereich-Abstände A1, A2 einzeln eingestellt werden. Auch hierbei kann für jeden Endbereich 11, 12 ein Betrag vorgegeben sein, um welchen der zugehörige Endbereich-Abstand A1, A2 verringert wird. Auch dies kann schrittweise erfolgen, wobei nach jedem Schritt ein Kontakt zwischen Gegenschneide 10 und Messer 4 überprüft wird. In jedem Fall kann bei Vorliegen eines Kontakts der wenigstens eine Endbereich-Abstand A1, A2 vergrößert werden, bis kein Kontakt mehr vorliegt, wonach wiederum zusätzlich eine Vergrößerung um einen Sicherheitsbetrag erfolgen kann. Nach dem Block S200 endet das Verfahren.

## Patentansprüche

1. Verfahren zur Instandhaltung einer Häckselvorrichtung (1) einer Landmaschine, welche Häckselvorrichtung (1) eine gegenüber einem Rahmen (25) um eine axiale Drehachse (D) drehbare Häckseltrommel (2) aufweist, mit einem Trommelkörper (3) und einer Mehrzahl daran arretierbarer Messer (4), eine im Betriebszustand mit den Messern (4) zusammenwirkende, gegenüber dem Rahmen (25) arretierbare Gegenschneide (10) mit zwei axial beabstandeten Endbereichen (11, 12), wobei radiale Endbereich-Abstände (A1, A2) von der Drehachse wenigstens teilweise unabhängig voneinander einstellbar sind, sowie eine Schleifvorrichtung (20), die dazu eingerichtet ist, die Messer (4) entlang einer sich wenigstens anteilig axial erstreckenden Schleifachse (S) zu schleifen, wobei das Verfahren wenigstens die folgenden Schritte aufweist:
- Schleifen (S100) wenigstens eines Messers (4) mittels der Schleifvorrichtung (20);
- Ausrichten (S110) der Gegenschneide (10) an wenigstens einem geschliffenen Messer (4) durch Einstellen der Endbereich-Abstände (A1, A2);
- Fortbewegen (S120) der Gegenschneide (10) von der Häckseltrommel (2) in einer Parallelverstellung, wobei beide Endbereich-Abstände (A1, A2) um einen gleichen Betrag vergrößert werden, welcher vorab festgelegt wurde;
- Neuanordnung (S130) wenigstens eines Messers (4) am Trommelkörper (3), wobei das neu angeordnete Messer (4) an der Gegenschneide (10) ausgerichtet (S170) und am Trommelkörper (3) arretiert wird; und
- Schleifen (S190) des wenigstens einen neu angeordneten Messers (4) mittels der Schleifvorrichtung (20).

2. Verfahren nach Anspruch 1, **dadurch gekennzeichnet, dass** die Endbereich-Abstände (A1, A2) mittels zweier aktorischer Stelleinrichtungen (15) eingestellt werden, von denen jede auf einen der Endbereiche (11, 12) einwirkt.

3. Verfahren nach einem der vorangehenden Ansprüche, **dadurch gekennzeichnet, dass** das wenigstens eine Messer (4) geschliffen wird (S100, S190), indem dieses bei rotierender Häckseltrommel (10) an einem Schleifkopf (22) der Schleifvorrichtung (20) vorbeigeführt wird, welcher während des Schleifens entlang einer bezüglich des Rahmens (25) stationären Schleifführung (21) parallel zur Schleifachse (S) verstellt wird.

4. Verfahren nach einem der vorangehenden Ansprüche, **dadurch gekennzeichnet, dass** bei der Neuanordnung (S130) die Position wenigstens eines Messers (4) am Trommelkörper (10) verändert wird (S150) und/oder wenigstens ein Messer (4) vom Trommelkörper (10) demontiert wird und durch ein anderes Messer (4) ersetzt wird (S160).

5. Verfahren nach einem der vorangehenden Ansprüche, **dadurch gekennzeichnet, dass** ein Schleifen (S100, S190) und/oder eine Neuanordnung (S130) einer Mehrzahl von Messern (4), insbesondere aller Messer (4), erfolgen.

6. Verfahren nach einem der vorangehenden Ansprüche, **dadurch gekennzeichnet, dass** nach dem Schleifen (S190) des wenigstens einen neu angeordneten Messers (4), durch Einstellen der Endbereich-Abstände (A1, A2), ein erneutes Ausrichten der Gegenschneide (10) an wenigstens einem neu angeordneten und geschliffenen Messer (4) durchgeführt wird (S200).

7. Verfahren nach einem der vorangehenden Ansprüche, **dadurch gekennzeichnet, dass** beim erneuten Ausrichten (S200) der Gegenschneide (10) die Endbereich-Abstände (A1, A2) in einer Parallelverstellung um einen gleichen Betrag verringert werden (S210), welcher vorab festgelegt wurde.

8. Verfahren nach einem der vorangehenden Ansprüche, **dadurch gekennzeichnet, dass** beim erneuten Ausrichten (S200) der Gegenschneide (10) die Endbereich-Abstände (A1, A2) einzeln eingestellt werden (S215).

9. Verfahren nach einem der vorangehenden Ansprüche, **dadurch gekennzeichnet, dass** wenigstens eine Parallelverstellung automatisch durchgeführt wird.

10. Verfahren nach einem der vorangehenden Ansprüche, **dadurch gekennzeichnet, dass** bei einer Parallelverstellung die Endbereich-Abstände (A1, A2) gleichzeitig verändert werden.

11. Verfahren nach einem der vorangehenden Ansprüche, **dadurch gekennzeichnet, dass** bei wenigstens einem Ausrichten (S110, S200) der Gegenschneide (10) wenigstens ein Endbereich-Abstand (A1, A2) verringert wird, ein Kontakt zwischen der Gegenschneide (10) und wenigstens einem Messer (4) geprüft wird und bei Vorliegen eines Kontakts der wenigstens eine Endbereich-Abstand (A1, A2) vergrößert wird.

12. Verfahren nach einem der vorangehenden Ansprüche, **dadurch gekennzeichnet, dass** wenigstens ein Ausrichten (S110, S200) der Gegenschneide bei rotierender Häckseltrommel (2) durchgeführt wird, wobei das Vorliegen eines Kontakts zwischen der Gegenschneide (10) und wenigstens einem Messer (4) mittels eines Schwingungssensors geprüft wird.

13. Verfahren nach einem der vorangehenden Ansprüche, **dadurch gekennzeichnet, dass** bei einer Parallelverstellung die Endbereich-Abstände (A1, A2) in einer Mehrzahl von Schritten verringert werden, wobei nach jedem Schritt ein Kontakt geprüft wird.

14. Verfahren nach einem der vorangehenden Ansprüche, **dadurch gekennzeichnet, dass** bei Vorliegen eines Kontakts der wenigstens eine Endbereich-Abstand (A1, A2) so lange vergrößert wird, bis kein Kontakt mehr festgestellt wird, und danach beide Endbereich-Abstände (A1, A2) um einen gleichen Sicherheitsbetrag vergrößert werden, welcher vorab festgelegt wurde.

## Claims

1. Method for maintaining a chopping device (1) of an agricultural machine, which chopping device (1) comprises a chopping drum (2), which can be rotated about an axial axis of rotation (D) relative to a frame (25) and has a drum body (3) and a plurality of cutters (4) which can be locked on said body, a counter blade (10), which interacts with the cutters (4) in the operating state, can be locked relative to the frame (25) and has two axially spaced end regions (11, 12), it being possible for radial end region distances (A1, A2) from the axis of rotation to be set independently of one another at least to some extent, and a sharpening device (20), which is configured to sharpen the cutters (4) along a sharpening axis (S) which extends at least partially axially, wherein the method comprises at least the following steps:
- sharpening (S100) at least one cutter (4) by means of the sharpening device (20);
- aligning (S110) the counter blade (10) with at least one sharpened cutter (4) by setting the end region distances (A1, A2);
- moving (S120) the counter blade (10) away from the chopping drum (2) in a parallel adjustment, wherein the two end region distances (A1, A2) are increased by the same amount, which has been predetermined;
- rearranging (S130) at least one cutter (4) on the drum body (3), wherein the rearranged cutter (4) is aligned (S170) with the counter blade (10) and locked on the drum body (3); and
- sharpening (S190) the at least one rearranged cutter (4) by means of the sharpening device (20).

2. Method according to claim 1, **characterized in that** the end region distances (A1, A2) are set by means of two actuator positioning apparatuses (15), each of which acts on one of the end regions (11, 12).

3. Method according to either of the preceding claims, **characterized in that** the at least one cutter (4) is sharpened (S100, S190) by passing it past a sharpening head (22) of the sharpening device (20) while the chopping drum (10) is rotating, which sharpening head is adjusted along a sharpening guide (21), which is stationary with respect to the frame (25), in parallel with the sharpening axis (S) during the sharpening process.

4. Method according to any of the preceding claims, **characterized in that** in the rearrangement (S130), the position of at least one cutter (4) on the drum body (10) is changed (S150) and/or at least one cutter (4) is removed from the drum body (10) and replaced by another cutter (4) (S160).

5. Method according to any of the preceding claims, **characterized in that** a plurality of cutters (4), in particular all the cutters (4), are sharpened (S100, S190) and/or rearranged (S130).

6. Method according to any of the preceding claims, **characterized in that** after the at least one rearranged cutter (4) has been sharpened (S190) by setting the end region distances (A1, A2), the counter blade (10) is realigned (S200) on at least one rearranged and sharpened cutter (4).

7. Method according to any of the preceding claims, **characterized in that** when the counter blade (10) is realigned (S200), the end region distances (A1, A2) are reduced by an equal amount (S210), which has been predetermined, in a parallel adjustment.

8. Method according to any of the preceding claims, **characterized in that** when the counter blade (10) is realigned (S200), the end region distances (A1, A2) are set (S215) individually.

9. Method according to any of the preceding claims, **characterized in that** at least one parallel adjustment is performed automatically.

10. Method according to any of the preceding claims, **characterized in that** in the course of a parallel adjustment, the end region distances (A1, A2) are changed simultaneously.

11. Method according to any of the preceding claims, **characterized in that** at least one end region distance (A1, A2) is reduced in the course of at least one alignment (S110, S200) of the counter blade (10), contact between the counter blade (10) and at least one cutter (4) is checked, and if contact is present, the at least one end region distance (A1, A2) is increased.

12. Method according to any of the preceding claims, **characterized in that** the counter blade is aligned (S110, S200) while the chopping drum (2) is rotating, the presence of contact between the counter blade (10) and at least one cutter (4) being checked by means of a vibration sensor.

13. Method according to any of the preceding claims, **characterized in that** in the course of a parallel adjustment, the end region distances (A1, A2) are reduced in a plurality of steps, with contact being checked after each step.

14. Method according to any of the preceding claims, **characterized in that** if contact is present, the at least one end region distance (A1, A2) is increased until no contact is established any longer, and then the two end region distances (A1, A2) are increased by an equal safety amount, which has been predetermined.

## Revendications

1. Procédé pour l'entretien d'un dispositif de hachage (1) d'une machine agricole, lequel dispositif de hachage (1) présente un tambour de hachage (2) pouvant tourner autour d'un axe de rotation axial (D) par rapport à un cadre (25), comportant un corps de tambour (3) et une pluralité de couteaux (4) pouvant être bloqués sur celui-ci, une contre-lame (10) coopérant avec les couteaux (4) en état de fonctionnement et pouvant être bloquée par rapport au cadre (25), comportant deux zones d'extrémité (11, 12) espacées axialement, dans lequel des espacements de zones d'extrémité (A1, A2) radiaux vis-à-vis de l'axe de rotation peuvent être réglées au moins en partie indépendamment l'un de l'autre, ainsi qu'un dispositif d'affûtage (20) conçu pour affûter les couteaux (4) le long d'un axe d'affûtage (S) s'étendant au moins en partie axialement, dans lequel le procédé présente au moins les étapes suivantes :
- affûtage (S100) d'au moins un couteau (4) au moyen du dispositif d'affûtage (20) ;
- alignement (S110) de la contre-lame (10) sur au moins un couteau (4) affûté en réglant les espacements de zones d'extrémité (A1, A2) ;
- éloignement (S120) de la contre-lame (10) du tambour de hachage (2) selon un réglage parallèle, dans lequel les deux espacements de zones d'extrémité (A1, A2) sont augmentés d'une même quantité qui a été déterminée au préalable ;
- réarrangement (S130) d'au moins un couteau (4) sur le corps de tambour (3), dans lequel le couteau (4) réarrangé est aligné (S170) sur la contre-lame (10) et bloqué sur le corps de tambour (3) ; et
- affûtage (S190) de l'au moins un couteau (4) réarrangé au moyen du dispositif d'affûtage (20).

2. Procédé selon la revendication 1, **caractérisé en ce que** les espacements de zones d'extrémité (A1, A2) sont réglés au moyen de deux appareils de réglage actionneurs (15) dont chacun agit sur l'une des zones d'extrémité (11, 12).

3. Procédé selon l'une des revendications précédentes,
**caractérisé en ce que** l'au moins un couteau (4) est affûté (S100, S190) en le faisant passer, lorsque le tambour de hachage (10) est en rotation, devant une tête d'affûtage (22) du dispositif d'affûtage (20) qui, pendant l'affûtage, est déplacée parallèlement à l'axe d'affûtage (S) le long d'un guide d'affûtage (21) stationnaire par rapport au cadre (25).

4. Procédé selon l'une des revendications précédentes,
**caractérisé en ce que,** lors du réarrangement (S130), la position d'au moins un couteau (4) sur le corps de tambour (10) est modifiée (S150) et/ou au moins un couteau (4) est démonté du corps de tambour (10) et remplacé (S160) par un autre couteau (4).

5. Procédé selon l'une des revendications précédentes,
**caractérisé en ce qu'**un affûtage (S100, S190) et/ou un réarrangement (S130) d'une pluralité de couteaux (4), en particulier de tous les couteaux (4), sont effectués.

6. Procédé selon l'une des revendications précédentes,
**caractérisé en ce qu'**après l'affûtage (S190) de l'au moins un couteau (4) réarrangé, un réalignement de la contre-lame (10) sur au moins un couteau (4) réarrangé et affûté, est réalisé (S200) en réglant les espacements de zones d'extrémité (A1, A2).

7. Procédé selon l'une des revendications précédentes,
**caractérisé en ce que**, lors du réalignement (S200) de la contre-lame (10), les espacements de zones d'extrémité (A1, A2) sont réduits (S210) selon un réglage parallèle d'une même quantité qui a été déterminée au préalable.

8. Procédé selon l'une des revendications précédentes,
**caractérisé en ce que**, lors du réalignement (S200) de la contre-lame (10), les espacements de zones d'extrémité (A1, A2) sont réglés (S215) individuellement.

9. Procédé selon l'une des revendications précédentes,
**caractérisé en ce qu'**au moins un réglage parallèle est réalisé automatiquement.

10. Procédé selon l'une des revendications précédentes,
**caractérisé en ce que,** lors d'un réglage parallèle, les espacements de zones d'extrémité (A1, A2) sont modifiés simultanément.

11. Procédé selon l'une des revendications précédentes,
**caractérisé en ce que,** lors d'au moins un alignement (S110, S200) de la contre-lame (10), au moins un espacement de zone d'extrémité (A1, A2) est réduit, un contact entre la contre-lame (10) et au moins un couteau (4) est vérifié et, en présence d'un contact, l'au moins un espacement de zone d'extrémité (A1, A2) est augmenté.

12. Procédé selon l'une des revendications précédentes,
**caractérisé en ce qu'**au moins un alignement (S110, S200) de la contre-lame est réalisé lorsque le tambour de hachage (2) est en rotation, dans lequel la présence d'un contact entre la contre-lame (10) et au moins un couteau (4) est vérifiée au moyen d'un capteur de vibrations.

13. Procédé selon l'une des revendications précédentes,
**caractérisé en ce que,** lors d'un réglage parallèle, les espacements de zones d'extrémité (A1, A2) sont réduits en une pluralité d'étapes, dans lequel un contact est vérifié après chaque étape.

14. Procédé selon l'une des revendications précédentes,
**caractérisé en ce que,** en présence d'un contact, l'au moins un espacement de zone d'extrémité (A1, A2) est augmenté jusqu'à ce que plus aucun contact ne soit détecté, puis les deux espacements de zones d'extrémité (A1, A2) sont augmentés d'une même quantité de sécurité qui a été déterminée au préalable.
